# EUROPÄISCHE PATENTANMELDUNG

(11) **EP 4 428 584 A1**
(43) Veröffentlichungstag der Anmeldung: **11.09.2024**
(21) Anmeldenummer: 23160678.1
(22) Anmeldetag: 08.03.2023
(51) Int. Cl.: G01V 8/20, F16P 3/14, G05B 9/02, G01S 17/04, G08B 13/183, G01V 8/22

(54) **LICHTVORHANG UND VERFAHREN ZUM BETRIEB EINES LICHTVORHANGS**

(71) Anmelder: Leuze electronic GmbH + Co. KG, 73277 Owen/Teck (DE)
(72) Erfinder: Hörderich, Johann, 82291 Mammendorf (DE); Feller, Bernhard, 86316 Friedberg (DE)
(74) Vertreter: Ruckh, Rainer Gerhard

(57) **Zusammenfassung**

Die Erfindung betrifft einen Lichtvorhang (1) zur Erfassung von Objekten in einem Überwachungsbereich mit einer Anzahl von Lichtstrahlen (3) emittierenden Sendern (4) und Lichtstrahlen (3) empfangenden Empfängern (6). Ein Sender (4) bildet mit einem zugeordneten Empfänger (6) eine Strahlachse, wobei bei freiem Überwachungsbereich die Lichtstrahlen (3) aller Sender (4) auf den jeweils zugeordneten Empfänger (6) treffen. Bei einem Objekteingriff im Überwachungsbereich sind die Lichtstrahlen (3) wenigstens einer Strahlachse unterbrochen Mit einer Auswerteeinheit (8) wird in Abhängigkeit von Empfangssignalen der Empfänger (6) ein Objektfeststellungssignal generiert. Die Sender (4) werden zyklisch einzeln nacheinander aktiviert. Während jeder Aktivierung werden Lichtstrahlen (3) in Form einer Pulsfolge von Lichtimpulsen emittiert. In der Auswerteeinheit (8) wird als Kriterium für eine nicht unterbrochene Strahlachse in der Auswerteeinheit (8) anhand von Empfangssignalen der zeitliche Abstand der Pulsfolge des Senders (4) dieser Strahlachse zu einer Pulsfolge eines Senders (4) einer weiteren Strahlachse bestimmt und mit einem in der Auswerteeinheit (8) gespeicherten Sollwert verglichen.

## Beschreibung

Die Erfindung betrifft einen Lichtvorhang und ein Verfahren zum Betrieb eines Lichtvorhangs.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern, die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, d.h. die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Um die Lichtstrahlen der einzelnen Strahlachsen empfangsseitig sicher nachweisen und identifizieren zu können, emittieren die Sender vorteilhaft Lichtstrahlen in Form von Lichtimpulsen.

Nachteilig ist, dass die Lichtimpulse, insbesondere deren Pulsbreiten, amplitudenabhängig sind, was zu Signalverzerrungen und dadurch bedingt zu Fehldetektionen einzelner Lichtimpulse führen kann. Dies beeinträchtigt die Nachweissicherheit des Lichtvorhangs.

Der Erfindung liegt die Aufgabe zugrunde, einen Lichtvorhang der eingangs genannten Art bereitzustellen, mit welchem eine sichere Obj ektdetektion bei hoher Verfügbarkeit durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich mit einer Anzahl von Lichtstrahlen emittierenden Sendem und Lichtstrahlen empfangenden Empfängern. Ein Sender bildet mit einem zugeordneten Empfänger eine Strahlachse, wobei bei freiem Überwachungsbereich die Lichtstrahlen aller Sender auf den jeweils zugeordneten Empfänger treffen. Bei einem Objekteingriff im Überwachungsbereich sind die Lichtstrahlen wenigstens einer Strahlachse unterbrochen. Mit einer Auswerteeinheit wird in Abhängigkeit von Empfangssignalen der Empfänger ein Objektfeststellungssignal generiert. Die Sender werden zyklisch einzeln nacheinander aktiviert. Während jeder Aktivierung werden Lichtstrahlen in Form einer Pulsfolge von Lichtimpulsen emittiert. In der Auswerteeinheit wird als Kriterium für eine nicht unterbrochene Strahlachse in der Auswerteeinheit anhand von Empfangssignalen der zeitliche Abstand der Pulsfolge des Senders dieser Strahlachse zu einer Pulsfolge eines Senders einer weiteren Strahlachse bestimmt und mit einem in der Auswerteeinheit gespeicherten Sollwert verglichen.

Die Erfindung betrifft weiterhin ein entsprechendes Verfahren.

Der erfindungsgemäße Lichtvorhang weist eine Anordnung von Sendern auf, die vorteilhaft in einer Sendereinheit integriert sind. Weiterhin weist der Lichtvorhang vorteilhaft eine Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Objekte im Überwachungsbereich werden dadurch erkannt, dass zumindest die Lichtstrahlen einer Strahlachse unterbrochen werden.

Prinzipiell kann der Lichtvorhang auch als Reflexions-Lichtvorhang ausgebildet sein. Dann sind die Sender und Empfänger in einer gemeinsamen Sender-/Empfängereinheit untergebracht, die an einem Rand des Überwachungsbereichs angeordnet ist. Am anderen Rand des Überwachungsbereichs befindet sich ein Reflektor als weiterer Bestandteil des Lichtvorhangs. Bei freiem Überwachungsbereich werden die Lichtstrahlen jedes Senders zum Reflektor geführt und von dort zurück zum zugeordneten Empfänger reflektiert.

Der Begriff Lichtvorhang umfasst dabei generell auch Lichtschrankenanordnungen, d.h. Mehrfachanordnungen von diskreten, separaten Lichtschranken.

Die Strahlachsen, insbesondere die Sender des Lichtvorhangs, werden zyklisch einzeln nacheinander aktiviert, d.h. die einen Zyklus bildenden Aktivierungszeitintervalle für die Sender bzw. Strahlachsen sind fest vorgegeben und in der Auswerteeinheit des Lichtvorhangs bekannt. Somit existiert ein festes vorgegebenes zeitliches Raster für die Aktivierung der Sender bzw. Stahlachsen, was für die erfindungsgemäße Signalauswertung ausgenutzt wird.

Erfindungsgemäß werden die Sender des Lichtvorhangs zyklisch einzeln nacheinander aktiviert und emittieren während jeder Aktivierung Lichtstrahlen in Form einer Pulsfolge von Lichtimpulsen. In der Auswerteeinheit wird als Kriterium für eine nicht unterbrochene Strahlachse in der Auswerteeinheit der zeitliche Abstand der Pulsfolge des Senders dieser Strahlachse zu einer Pulsfolge eines Senders einer weiteren Strahlachse bestimmt und mit einem in der Auswerteeinheit gespeicherten Sollwert verglichen wird.

Der Begriff Pulsfolge umfasst nicht nur eine Folge von mehreren Lichtimpulsen, sondern auch nur einen einzelnen Lichtimpuls.

Erfindungsgemäß wird somit als Kriterium, ob eine bestimmte Strahlachse des Lichtvorhangs frei, d.h. nicht unterbrochen ist, empfangsseitig nicht oder nicht allein geprüft, ob die senderseitig emittierte Pulsfolge im zugeordneten Empfänger der Strahlachse empfangen wird.

Vielmehr wird als Kriterium ob eine Strahlachse frei ist eine weitere Strahlachse herangezogen, in dem geprüft wird, ob der zeitliche Abstand der Pulsfolge einem vorgegebenen Sollwert entspricht.

Dadurch wird eine erhöhte Nachweissicherheit bei der Objektdetektion erzielt. Zudem wird auch eine erhöhte Verfügbarkeit erzielt, da es für die Bestimmung des zeitlichen Abstands der Pulsfolge der Strahlachse und der weiteren Strahlachse nicht erforderlich ist, dass alle Lichtimpulse der Pulsfolge erkannt werden. Daher wird eine hohe Fehlertoleranz erzielt, da trotz Fehldetektionen einzelner Lichtimpulse infolge von amplitudenabhängigen Signalverzerrungen oder Fremdlichteinstrahlungen erkannt werden kann, ob das Kriterium für eine nicht unterbrochene Strahlachse erfüllt ist.

Vorteilhaft ist das Objektfeststellungssignal ein binäres Schaltsignal, dessen Schaltzustände angeben, ob ein Objekt im Überwachungsbereich vorhanden ist oder nicht.

Der Lichtvorhang kann alternativ zur Konturerkennung von Objekten eingesetzt werden, wobei hierzu in der Auswerteeinheit das Muster der unterbrochenen Strahlachsen untersucht wird.

Besonders vorteilhaft wird die Strahlachse als nicht unterbrochen gewertet, wenn der Abstand der Pulsfolge des Senders dieser Strahlachse zu der Pulsfolge des Senders der weiteren Strahlachse innerhalb vorgegebener Toleranzgrenzen mit dem Sollwert übereinstimmt.

In diesem Fall nimmt bei einem außerhalb der Toleranzgrenze liegenden Abstand das Schaltsignal den Schaltzustand "Objekt vorhanden" ein.

Alternativ oder zusätzlich wird bei einem außerhalb der Toleranzgrenze liegenden Abstand in der Auswerteeinheit eine Diagnosemeldung generiert.

Die Diagnosemeldung kann über einen Ausgang des Lichtvorhangs ausgegeben oder an einer Anzeigeeinheit angezeigt werden.

Gemäß einer vorteilhaften Ausführungsform wird der Abstand der Pulsfolge der Strahlachse zu einer Pulsfolge einer weiteren Strahlachse, die benachbart zu dieser Strahlachse ist, bestimmt.

Damit wird die jeweilige Strahlachse mit der vorangegangenen oder auf diese folgenden Strahlachse bei der zyklischen Aktivierung in Beziehung gesetzt.

Bei einer vorliegenden Unterbrechung der benachbarten Strahlachse wird die dieser nachfolgende Strahlachse zur Abstandsbestimmung herangezogen.

Da der Abstand der Pulsfolge der beiden Strahlachsen in diesem Fall größer ist, wird eine größere Toleranzgrenze bei dem Sollwertvergleich zugelassen. Sobald die benachbarte Strahlachse wieder frei ist, wird diese wieder zur Bestimmung des zeitlichen Abstands herangezogen.

Generell kann die Abstandsbestimmung auch zyklusübergreifend erfolgen. Beispielswiese kann der Abstand der Pulsfolge einer Strahlachse am Ende eines Zyklus zur Pulsfolge einer Strahlachse des nächsten Zyklus bestimmt werden.

Gemäß einer vorteilhaften Ausgestaltung wird der zeitliche Abstand zwischen einem Referenzpunkt eines bestimmten Lichtimpulses der Strahlachse und einem Referenzpunkt eines bestimmten Lichtimpulses der weiteren Strahlachse bestimmt.

Da die Abstandsbestimmung der Pulsfolge der Strahlachse und der weiteren Strahlachse auf einen Referenzpunkt eines Lichtimpulses bezogen ist, ist es unkritisch, wenn nicht alle Lichtimpulse der Pulsfolge korrekt erkannt werden. Damit ist ein fehlertolerantes und gleichzeitig sicheres Nachweisverfahren gegeben.

Typischerweise wird von einem Sender eine Pulsfolge mit mehreren Lichtimpulsen emittiert.

Jedoch ist es ebenfalls möglich, dass von einem Sender eine Pulsfolge mit nur einem Lichtimpuls emittiert wird.

Vorteilhaft ist ein Referenzpunkt die vordere Flanke oder hintere Flanke oder ein Pulsmerkmal eines Lichtimpulses.

Die vordere oder hintere Flanke eines Lichtimpulses als Referenzpunkt liefert einen einfachen und genauen Bezugspunkt für die Bestimmung des zeitlichen Abstands der Pulsfolge.

Ebenso kann ein Pulsmerkmal eines Lichtimpulses, wie ein spezieller definierter Amplitudenverlauf des Lichtimpulses, insbesondere ein Zwischenmaximum oder ein charakteristischer Anstieg oder Abfall der Amplitude des Lichtimpulses, als Referenzpunkt dienen.

Gemäß einer vorteilhaften Weiterbildung ändern sich die zeitlichen Abstände in unterschiedlichen Zyklen. Dementsprechend sind zeitlich veränderliche Sollwerte in der Auswerteeinheit abgespeichert.

Diese zeitliche Variation kann dadurch erzielt werden, dass die Sendezeitpunkte der Lichtimpulse senderseitig in einem vorgegebenen Zeitschema geändert werden.

Vorteilhaft ist in diesem Fall die Variation der zeitlichen Abstände senderseitig einstellbar. Weiter sind die entsprechenden Sollwerte empfangsseitig einstellbar.

Gemäß einer vorteilhaften Weiterbildung sind Lichtstrahlen von Strahlachsen empfangsseitig anhand von Kenngrößen der jeweiligen Pulsfolge erkennbar.

Dabei können Kenngrößen von Pulsfolgen Pulsabstände von Lichtimpulsen innerhalb einer Pulsfolge und/oder Pulsbreiten und/oder die Anzahl von Lichtimpulsen innerhalb einer Pulsfolge sein.

Dies erhöht die Nachweissicherheit bei Objektdetektionen zusätzlich, da mit der Erkennung der Kenngrößen der Lichtimpulse einer Strahlachse ein weiteres Kriterium für das Vorliegen einer nicht unterbrochenen Strahlachse bereitgestellt wird.

Gemäß einer vorteilhaften Ausführungsform werden Lichtstrahlen von Strahlachsen anhand von ermittelten Abständen von Pulsfolgen der jeweiligen Strahlachse und weiteren Strahlachsen empfangsseitig unterschieden.

Damit können anhand der Abstandsbestimmungen die einzelnen Strahlachsen des Lichtvorhangs identifiziert werden.

Gemäß einer vorteilhaften Ausführungsform wird die Aktivierung der Empfänger und der Sender mittels wenigstens eines Synchronisationsstrahls, der von den Lichtstrahlen eines Senders gebildet, optisch synchronisiert.

Wesentlich ist, dass der Synchronisationsstrahl eindeutig von den anderen Lichtstrahlen unterschieden werden kann.

Dies kann anhand der Pulsfolgen der einzelnen Lichtstrahlen erfolgen.

Weiterhin kann der Synchronisationsstrahl anhand des Abstands seiner Pulsfolge zur Pulsfolge einer weiteren Strahlachse identifiziert werden.

Gemäß einer vorteilhaften Ausgestaltung ist der Lichtvorhang ein Sicherheitssensor. Der Lichtvorhang weist dann einen fehlersicheren Aufbau auf und kann so in sicherheitstechnischen Applikationen eingesetzt werden. Der fehlersichere Aufbau kann insbesondere durch eine mehrkanalige Auswerteeinheit realisiert werden.

Beispielsweise kann dann mit dem Lichtvorhang der Zugang zu einem Gefahrenbereich an einer Anlage überwacht werden. Der Betrieb der Anlage wird dann nur freigegeben, wenn der Lichtvorhang ein Schaltsignal mit einem Schaltzustand "freier Überwachungsbereich" generiert. Wird jedoch mit dem Lichtvorhang ein Objekt im Überwachungsbereich detektiert, wird ein Schaltsignal mit einem entsprechenden Schaltzustand "Objekt vorhanden" generiert, wodurch die Anlage abgeschaltet wird.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Erstes Beispiel von Zeitdiagrammen von Pulsfolgen verschiedener Strahlachsen des Lichtvorhangs gemäß Figur 1.
- Figur 3:: Zweites Beispiel von Zeitdiagrammen von Pulsfolgen verschiedener Strahlachsen des Lichtvorhangs gemäß Figur 1.
- Figur 4:: Drittes Beispiel von Zeitdiagrammen von Pulsfolgen verschiedener Strahlachsen des Lichtvorhangs gemäß Figur 1.
- Figur 5:: Viertes Beispiel von Zeitdiagrammen von Pulsfolgen verschiedener Strahlachsen des Lichtvorhangs gemäß Figur 1.
- Figur 6:: Erstes Beispiel einer gestörten Pulsfolge.
- Figur 7a, 7b:: Varianten eines zweiten Beispiels einer gestörten Pulsfolge.

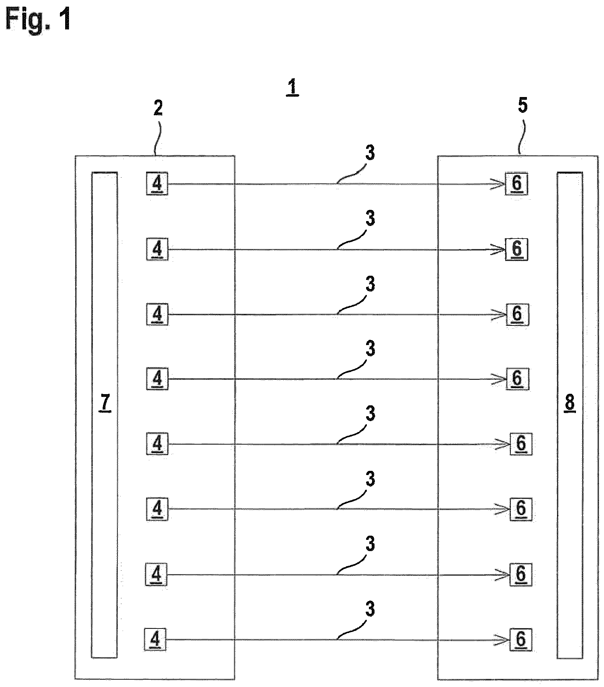

Figur 1 zeigt den prinzipiellen Aufbau des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 in Form von Sendedioden angeordnet ist. Die Sendedioden sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern 6 in Form von Empfangsdioden vorgesehen ist. Die Empfangsdioden sind von Foto-PIN-Dioden oder Foto-Dioden gebildet. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfänger 6 ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

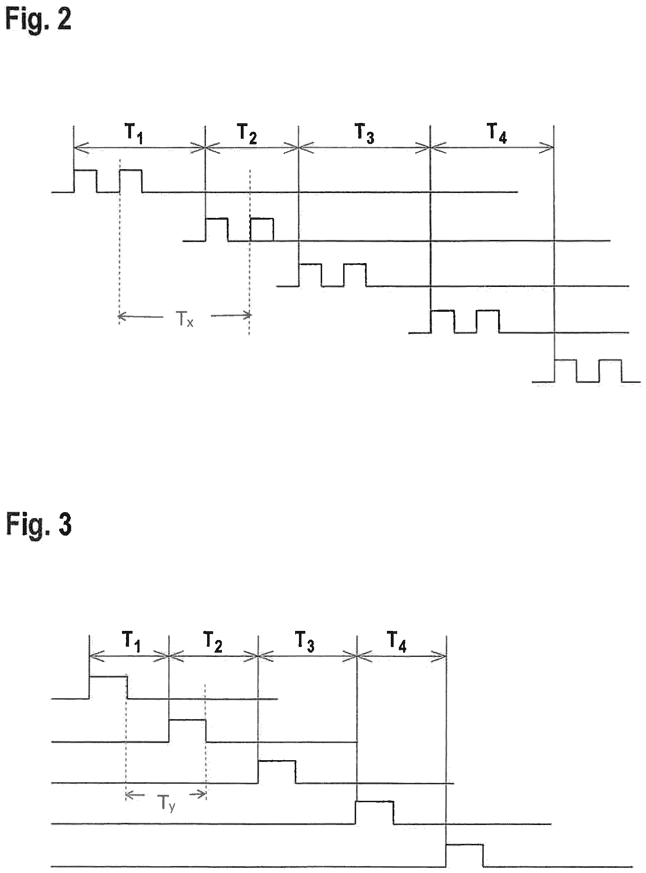

Die Figuren 2 und 3 zeigen anhand von Zeitdiagrammen zwei unterschiedliche Ausführungsformen der erfindungsgemäßen Signalauswertung.

Erfindungsgemäß werden die Sender 4 des Lichtvorhangs 1 zyklisch einzeln nacheinander aktiviert und emittieren Lichtstrahlen 3 in Form von Pulsfolgen von Lichtimpulsen. Durch eine optische Synchronisierung werden die Empfänger 6 jeder Strahlachse synchron zu dem jeweils zugeordneten Sender 4 aktiviert.

Bei freiem Strahlengang des Lichtvorhangs 1 empfangen die Empfänger 6 der einzelnen Strahlachsen die Pulsfolgen der zugeordneten Sender 4, d.h. in den Empfangssignalen der Empfänger 6 werden Pulsfolgen mit Pulsen registriert, die den von den Sendern 4 des Lichtvorhangs 1 emittierten Lichtimpulsen entsprechen. Dies ist in den Figuren 2 und 3 für einige Empfänger 6 des Lichtvorhangs 1 dargestellt. Dabei zeigen die Figuren 2 und 3 die empfangen Pulsfolgen während eines Zyklus der Senderaktivierung.

Bei der Ausführungsform gemäß Figur 2 emittiert während eines Zyklus jeder Sender 4 eine Pulsfolge von zwei durch eine Pause getrennten Lichtimpulsen. Bei freiem Strahlengang des Lichtvorhangs 1 empfängt jeder Empfänger 6 entsprechend eine Pulsfolge von zwei durch eine Pause getrennten Pulsen, wie in Figur 2 dargestellt.

Erfindungsgemäß wird in der Auswerteeinheit 8 als Kriterium für ein Vorliegen einer freien Strahlachse geprüft, ob der zeitliche Abstand der Pulsfolge dieser Strahlachse und der Pulsfolge einer weiteren Strahlachse mit einem in der Auswerteeinheit 8 hinterlegten Sollwert übereinstimmt. Dabei liegt eine Übereinstimmung vor, wenn der ermittelte zeitliche Abstand innerhalb vorgegebener Toleranzgrenzen, d.h. einer oberen und unteren Toleranzgrenze, mit dem Sollwert übereinstimmt.

Bei einem außerhalb der Toleranzgrenze liegenden Abstand nimmt das Schaltsignal den Schaltzustand "Objekt vorhanden" ein.

Alternativ oder zusätzlich wird bei einem außerhalb der Toleranzgrenze liegenden Abstand in der Auswerteeinheit 8 eine Diagnosemeldung generiert.

Bei der Anordnung gemäß Figur 2 wird als Kriterium für eine nicht unterbrochene erste Strahlachse geprüft, ob der zeitliche Abstand dieser Pulsfolge zur Pulsfolge der zweiten Strahlachse (in Figur 2 mit T₁ bezeichnet) innerhalb von Toleranzgrenzen mit dem jeweiligen Sollwert übereinstimmt.

Wie auch bei allen anderen Strahlachsen und auch in dem folgenden Ausführungsbeispiel ist der Referenzpunkt für die Bestimmung des zeitlichen Abstands immer die Vorderflanke des ersten Pulses der jeweiligen Pulsfolge.

Alternativ könnte auch eine hintere Flanke oder ein sonstiges Pulsmerkmal eines Pulses als Referenzpunkt dienen.

Alternativ ist der Referenzpunkt für die Bestimmung des zeitlichen Abstands die Vorderflanke oder ein anderes Merkmal des zweiten oder weiterer Pulse der jeweiligen Pulsfolge.

Entsprechend wird für die zweite Strahlachse der zeitliche Abstand deren Pulsfolge zur Pulsfolge der dritten Strahlachse bestimmt (in Figur 2 mit T₂ b bezeichnet) und mit dem jeweiligen Sollwert verglichen.

Weiterhin wird für die dritte Strahlachse der zeitliche Abstand deren Pulsfolge zur Pulsfolge der vierten Strahlachse bestimmt (in Figur 2 mit T₂ bezeichnet) und mit dem jeweiligen Sollwert verglichen.

Schließlich wird für die vierte Strahlachse der zeitliche Abstand deren Pulsfolge und zur Pulsfolge der fünften Strahlachse bestimmt (in Figur 2 mit T₂ bezeichnet) und mit dem jeweiligen Sollwert verglichen.

Figur 2 zeigt den Fall, dass alle Strahlachsen frei sind. Bei der Unterbrechung einer Strahlachse wird wenigstens einer der zeitlichen Abstände T₁ ... T₄ oder alternativ Tₓ nicht erkannt. Entsprechend Tₓ können auch bei den anderen Achsen entsprechende Zeitabstände (nicht gezeigt) für zweite oder weitere Pulse der Pulsfolge ausgewertet werden.

Zudem kann als Bedingung für das Vorliegen einer freien Strahlachse geprüft werden, ob alle oder einzelne Pulse der jeweiligen Pulsfolge in der Auswerteeinheit 8 registriert werden.

Die Ausführungsform gemäß Figur 3 unterscheidet sich von der Ausführungsform gemäß Figur 2 nur dadurch, dass jede Pulsfolge nicht aus zwei Lichtimpulsen, sondern nur aus einem Lichtimpuls besteht.

Bei den Ausführungsformen der Figuren 2 und 3 sind alle zeitlichen Abstände T₁ ... T₄ oder alternativ der Zeitabstand der fallenden Flanke Ty unterschiedlich. Dadurch können die einzelnen Strahlachsen unterschieden und identifiziert werden.

Wenigstens eine solche eindeutig identifizierbare Strahlachse kann zur optischen Synchronisierung des Lichtvorhangs 1 verwendet werden, d.h. die Lichtstrahlen 3 bilden einen Synchronisationsstrahl. Dabei kann eine bestimmte Strahlachse zur Synchronisierung ausgewählt werden, beispielsweise die erste oder letzte Strahlachse des Lichtvorhangs 1.

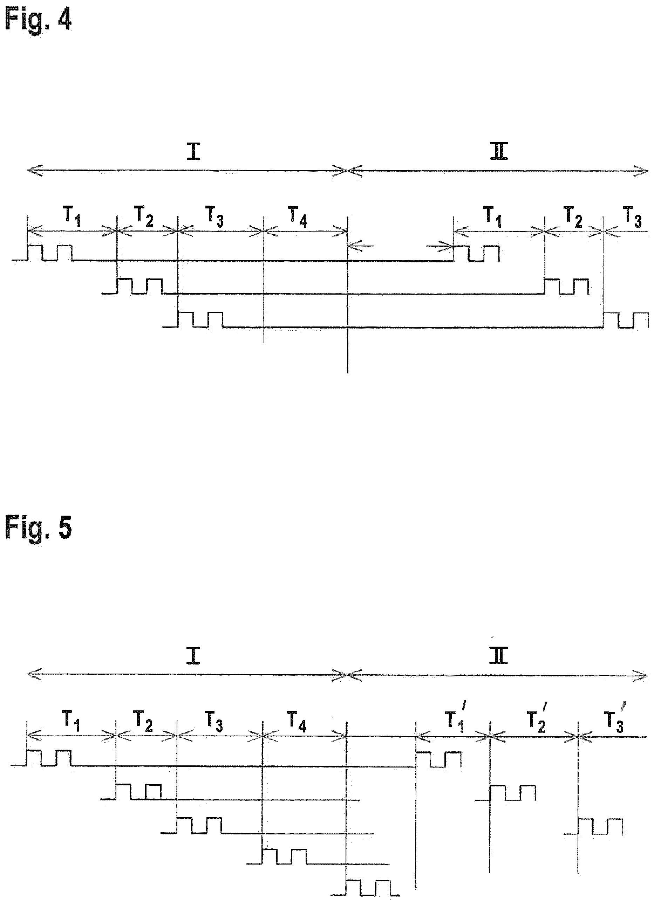

Figur 4 zeigt die erweiterte Darstellung des Ausführungsbeispiels gemäß Figur 2, wobei in Figur 4 zwei Zyklen der Strahlaktivierung dargestellt sind. Wie Figur 4 zeigt, wiederholen sich im zweiten Zyklus die Pulsfolge der Strahlachsen, so dass wieder dieselben zeitlichen Abstände erhalten werden.

Figur 5 zeigt eine Variante der Ausführungsform gemäß Figur 4. Bei der Ausführungsform gemäß Figur 5 sind im zweiten Zyklus die zeitlichen Abstände T₁', T₂', T₃', T₄' gegenüber den seitlichen Abständen T₁, T₂, T₃, T₄ im ersten Zyklus verändert. Generell können zeitliche Abstände in den einzelnen Zyklen gemäß bestimmten Schemata variieren, wodurch eine zusätzliche unterlagerte Informations-Codierung über die Strahlachsen erreicht wird.

Diese Variation kann durch eine Einstellung des Senderbetriebs in der Steuereinheit 7 erzielt werden. Entsprechend werden variierende Sollwerte vorgegeben. In der Auswerteeinheit 8 des Empfängers 5 werden die unterschiedlichen Abstandswerte ausgewertet und die unterlagerten Informations-Codierungen ermittelt.

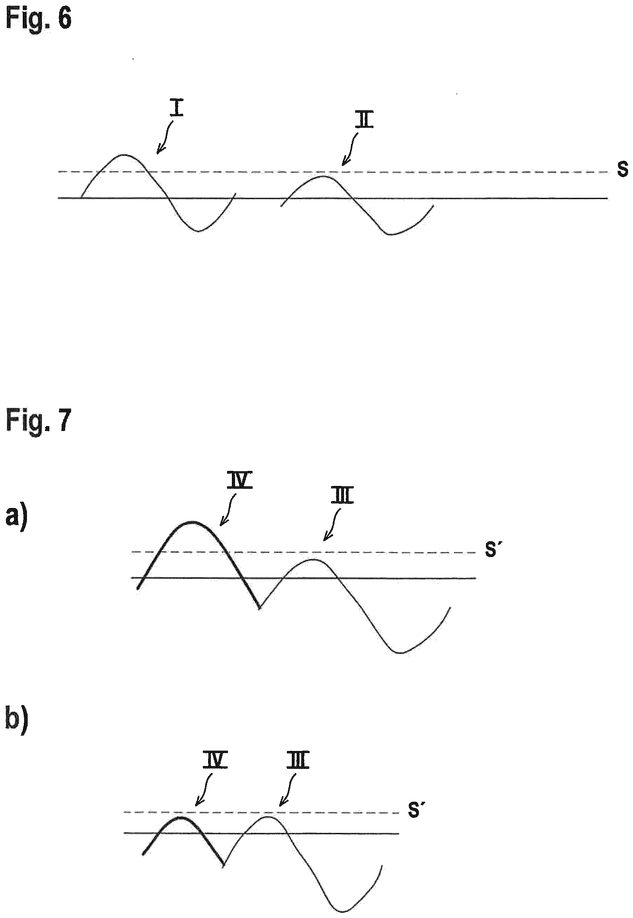

Die Figuren 6, 7a, 7b zeigen durch Störungen beeinflusste Pulse, die an Empfängern 6 des Lichtvorhangs 1 registriert werden. Bei diesen Ausführungsformen emittieren die Sender 4.

Figur 6 zeigt den Fall einer Pulsfolge mit zwei Pulsen I, II, deren Amplituden im vorliegenden Fall gering sind. Dabei übersteigt der erste Puls I noch einen Schwellwert S und wird damit in der Auswerteeinheit 8 erkannt, nicht jedoch der zweite Puls II. Obwohl nicht alle Lichtimpulse der Pulsfolge des Senders 4 erkannt werden, kann die Strahlachse noch als frei gewertet werden, wenn für diese der zeitliche Abstand des verbliebenen Pulses I zur Pulsfolge der nachfolgenden Strahlachse als mit dem Sollwert übereinstimmend erkannt wird.

In gleicher Weise könnte auch der Abstand des jeweils zweiten Pulses einer aufeinanderfolgender Pulsfolgen bestimmt werden. Alternativ können auch Abstand erster und zweiter oder weiterer Pulse aufeinanderfolgender Pulsfolgen bestimmt werden.

Die Figuren 7a und 7b zeigen an einem Empfänger 6 registrierten, von einem Lichtimpuls des zugeordneten Senders 4 stammenden Puls III. Diesem Puls III geht ein Störpuls IV voraus, der von einer Fremdlichtquelle stammt. Im Fall von Figur 7a übersteigt der Störimpuls IV den Schwellwert S und wird in der Auswerteeinheit 8 registriert, nicht jedoch der Puls III. Im Fall von Figur 7b liegen sowohl der Puls III als auch der Störpuls IV unterhalb des Schwellwerts S und werden in der Auswerteeinheit 8 nicht registriert. Der Lichtpuls des eigenen Senders 4 hat in diesem Beispiel bereits ein schwaches Signal, durch den vorgelagerten Störpuls ist das elektronische Ausgangspotential zum Startzeitpunkt des eigenen Pulses bereits negativ. Der schwache Puls erreicht, ausgehend von diesem Startpotential nicht mehr den erwarteten Schwellwert S', und bleibt von der nachfolgenden Auswerteeinheit unerkannt.

In beiden Fällen werden Lichtimpulse des zugeordneten Empfängers 6 nicht vollständig erkannt. Dennoch kann die entsprechende Strahlachse als frei gewertet werden, wenn für diese der zeitliche Abstand ihrer Pulsfolge zur Pulsfolge der nachfolgenden Strahlachse ermittelt werden kann und mit dem Sollwert übereinstimmt.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit

- (I): Puls
- (II): Puls
- (III): Puls
- (IV): Störpuls

- (S): Schwellwert

## Patentansprüche

1. Lichtvorhang (1) zur Erfassung von Objekten in einem Überwachungsbereich mit einer Anzahl von Lichtstrahlen (3) emittierenden Sendern (4) und Lichtstrahlen (3) empfangenden Empfängern (6), wobei jeweils ein Sender (4) mit einem zugeordneten Empfänger (6) eine Strahlachse bildet, wobei bei freiem Überwachungsbereich die Lichtstrahlen (3) aller Sender (4) auf den jeweils zugeordneten Empfänger (6) treffen und wobei bei einem Objekteingriff im Überwachungsbereich die Lichtstrahlen (3) wenigstens einer Strahlachse unterbrochen sind, und mit einer Auswerteeinheit (8), in welcher in Abhängigkeit von Empfangssignalen der Empfänger (6) ein Objektfeststellungssignal generiert wird, **dadurch gekennzeichnet, dass** die Sender (4) zyklisch einzeln nacheinander aktiviert werden und während jeder Aktivierung Lichtstrahlen (3) in Form einer Pulsfolge von Lichtimpulsen emittieren, und dass in der Auswerteeinheit (8) als Kriterium für eine nicht unterbrochene Strahlachse in der Auswerteeinheit (8) anhand von Empfangssignalen der zeitliche Abstand der Pulsfolge des Senders (4) dieser Strahlachse zu einer Pulsfolge eines Senders (4) einer weiteren Strahlachse bestimmt und mit einem in der Auswerteeinheit (8) gespeicherten Sollwert verglichen wird.

2. Lichtvorhang (1) nach Anspruch 1, **dadurch gekennzeichnet, dass** das Objektfeststellungssignal ein binäres Schaltsignal ist, dessen Schaltzustände angeben, ob ein Objekt im Überwachungsbereich vorhanden ist oder nicht.

3. Lichtvorhang (1) nach einem der Ansprüche 1 oder 2, **dadurch gekennzeichnet, dass** die Strahlachse als nicht unterbrochen gewertet wird, wenn der zeitliche Abstand der Pulsfolge des Senders (4) dieser Strahlachse zu der Pulsfolge des Senders (4) mindestens einer weiteren Strahlachse innerhalb vorgegebener Toleranzgrenzen mit dem Sollwert übereinstimmt.

4. Lichtvorhang (1) nach einem der Ansprüche 2 und 3, **dadurch gekennzeichnet, dass** bei einem außerhalb der Toleranzgrenze liegenden Abstand das Schaltsignal den Schaltzustand "Objekt vorhanden" einnimmt.

5. Lichtvorhang (1) nach einem der Ansprüche 3 oder 4, **dadurch gekennzeichnet, dass** bei einem außerhalb der Toleranzgrenze liegenden Abstand in der Auswerteeinheit (8) eine Diagnosemeldung generiert wird.

6. Lichtvorhang (1) nach einem der Ansprüche 1 bis 5, **dadurch gekennzeichnet, dass** der Abstand der Pulsfolge der Strahlachse zu einer Pulsfolge einer weiteren Strahlachse, die benachbart zu dieser Strahlachse ist, bestimmt wird.

7. Lichtvorhang (1) nach Anspruch 6, **dadurch gekennzeichnet, dass** bei einer vorliegenden Unterbrechung der vorausgehenden Strahlachse die dieser nachfolgende Strahlachse zur Abstandsbestimmung herangezogen wird.

8. Lichtvorhang (1) nach Anspruch 7, **dadurch gekennzeichnet, dass** bei einer Abstandsbestimmung der Pulsfolgen der Strahlachsen und der nachfolgenden Strahlachse der Vergleich mit dem Sollwert unter definierten Bedingungen innerhalb vergrößerter Toleranzgrenzen erfolgt.

9. Lichtvorhang (1) nach einem der Ansprüche 1 bis 8, **dadurch gekennzeichnet, dass** der zeitliche Abstand zwischen einem Referenzpunkt eines bestimmten Lichtimpulses der Strahlachse und einem Referenzpunkt eines bestimmten Lichtimpulses der weiteren Strahlachse bestimmt wird.

10. Lichtvorhang (1) nach einem der Ansprüche 1 bis 9, **dadurch gekennzeichnet, dass** von einem Sender (4) eine Pulsfolge mit mehreren Lichtimpulsen emittiert wird.

11. Lichtvorhang (1) nach einem der Ansprüche 1 bis 10, **dadurch gekennzeichnet, dass** von einem Sender (4) eine Pulsfolge mit nur einem Lichtimpuls emittiert wird.

12. Lichtvorhang (1) nach einem der Ansprüche 9 bis 11, **dadurch gekennzeichnet, dass** ein Referenzpunkt die vordere Flanke oder hintere Flanke oder ein Pulsmerkmal eines Lichtimpulses ist.

13. Lichtvorhang (1) nach einem der Ansprüche 1 bis 12, **dadurch gekennzeichnet, dass** die zeitlichen Abstände sich in unterschiedlichen Zyklen ändern, und dass dementsprechend zeitlich veränderliche Sollwerte in der Auswerteeinheit (8) abgespeichert sind.

14. Lichtvorhang (1) nach Anspruch 13, **dadurch gekennzeichnet, dass** die Variation der zeitlichen Abstände senderseitig einstellbar ist, und dass die entsprechenden Sollwerte empfangsseitig einstellbar sind.

15. Lichtvorhang (1) nach einem der Ansprüche 1 bis 14, **dadurch gekennzeichnet, dass** Lichtstrahlen (3) von Strahlachsen empfangsseitig anhand von Kenngrößen der jeweiligen Pulsfolge erkennbar sind.

16. Lichtvorhang (1) nach Anspruch 15, **dadurch gekennzeichnet, dass** Kenngrößen von Pulsfolgen Pulsabstände von Lichtimpulsen innerhalb einer Pulsfolge und/oder Pulsbreiten und/oder der Anzahl von Lichtimpulsen innerhalb einer Pulsfolge sind.

17. Lichtvorhang (1) nach einem der Ansprüche 1 bis 16, **dadurch gekennzeichnet, dass** Lichtstrahlen (3) von Strahlachsen anhand von ermittelten Abständen von Pulsfolgen der jeweiligen Strahlachse und weiteren Strahlachse empfangsseitig unterschieden werden.

18. Lichtvorhang (1) nach einem der Ansprüche 1 bis 17, **dadurch gekennzeichnet, dass** die Aktivierung der Empfänger (6) und der Sender (4) mittels wenigstens eines Synchronisationsstrahls, der von den Lichtstrahlen (3) eines Senders (4) gebildet ist, optisch synchronisiert wird.

19. Lichtvorhang (1) nach Anspruch 18, **dadurch gekennzeichnet, dass** der Synchronisationsstrahl anhand des Abstands seiner Pulsfolge zur Pulsfolge einer weiteren Strahlachse identifiziert wird.

20. Lichtvorhang (1) nach einem der Ansprüche 18 oder 19, **dadurch gekennzeichnet, dass** der oder die Synchronisationsstrahlen jeweils eine individuelle Codierung ihrer Pulsfolgen aufweisen.

21. Lichtvorhang (1) nach einem der Ansprüche 1 bis 20, **dadurch gekennzeichnet, dass** dieser ein Sicherheitssensor ist.

22. Verfahren zum Betrieb eines Lichtvorhangs (1) zur Erfassung von Objekten in einem Überwachungsbereich mit einer Anzahl von Lichtstrahlen (3) emittierenden Sendern (4) und Lichtstrahlen (3) empfangenden Empfängern (6), wobei jeweils ein Sender (4) mit einem zugeordneten Empfänger (6) eine Strahlachse bildet, wobei bei freiem Überwachungsbereich die Lichtstrahlen (3) aller Sender (4) auf den jeweils zugeordneten Empfänger (6) treffen und wobei bei einem Objekteingriff im Überwachungsbereich die Lichtstrahlen (3) wenigstens einer Strahlachse unterbrochen sind, und mit einer Auswerteeinheit (8), in welcher in Abhängigkeit von Empfangssignalen der Empfänger (6) ein Objektfeststellungssignal generiert wird, **dadurch gekennzeichnet, dass** die Sender (4) zyklisch einzeln nacheinander aktiviert werden und während jeder Aktivierung Lichtstrahlen (3) in Form einer Pulsfolge von Lichtimpulsen emittieren, und dass in der Auswerteeinheit (8) als Kriterium für eine nicht unterbrochene Strahlachse in der Auswerteeinheit (8) anhand von Empfangssignalen der zeitliche Abstand der Pulsfolge des Senders (4) dieser Strahlachse zu einer Pulsfolge eines Senders (4) einer zweiten Strahlachse bestimmt und mit einem in der Auswerteeinheit (8) gespeicherten Sollwert verglichen wird.
